# EUROPEAN PATENT SPECIFICATION

(11) **EP 2 890 188 B1**
(45) Date of publication and mention of the grant of the patent: **17.01.2018**
(21) Application number: 13838128.0
(22) Date of filing: 19.08.2013
(51) Int. Cl.: H04W 52/02, H04W 76/04, H04W 28/02, H04L 12/823

(54) **ELECTRIC ENERGY OPTIMIZATION METHOD AND SYSTEM**
ELEKTRISCHES ENERGIEOPTIMIERUNGSVERFAHREN UND SYSTEM
PROCÉDÉ ET SYSTÈME D'OPTIMISATION DE L'UTILISATION DE L'ÉNERGIE ÉLECTRIQUE

(30) Priority: 24.09.2012 CN 201210358426
(43) Date of publication of application: 01.07.2015
(73) Proprietor: ZTE Corporation, Shenzhen, Guangdong 518057 (CN)
(72) Inventor: XU, Hui, Shenzhen Guangdong 518057 (CN)
(74) Representative: Gevers Patents
(86) International application number: PCT/CN2013/081755
(87) International publication number: WO 2014/044101

(56) References cited:
- EP-A1- 2 190 253
- CN-A- 101 355 382
- CN-A- 101 754 400
- CN-A- 102 196 508
- US-A1- 2008 232 310
- US-A1- 2010 173 651
- US-A1- 2012 214 502
- US-B1- 6 477 361
- ALCATEL-LUCENT SHANGHAI BELL ET AL: "Discussion on MTC Idle states", 3GPP DRAFT; R2-102033 DISCUSSION ON MTC IDLE STATE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Beijing, china; 20100412, 1 April 2010 (2010-04-01), XP050422289, [retrieved on 2010-04-01]

## Description

### TECHNICAL FIELD

The disclosure relates to an electric energy consumption optimization technology, and in particularly to a method and system of electric energy consumption optimization.

### BACKGROUND

Machine to Machine (M2M) refers to all the technologies and means that are used to establish a connection between machines. The concept of M2M communication was already proposed in the 1990s but just remained in a theoretical state until 2000 since when the continuous development of mobile communication technologies makes it possible to establish the Internet of machines using mobile communication technologies. After being put into market around 2002, M2M service has been developed rapidly in the following years and has become the focus of attention of many communication equipment suppliers and telecom operators. At present, the machines in the world outnumber people so significantly that the bright market prospect of M2M technology is predictable.

The Research on application scenarios of M2M communication indicates that the provision of M2M communication to a mobile network has a potential market prospect. However, as M2M service has many new requirements on a system, it is necessary to optimize existing mobile networks to support M2M communication more effectively in order to enhance the competitiveness of mobile networks.

Existing mobile communication networks are designed mainly for human-to-human communication, and thus are not optimized enough for machine-to-machine communication or human-to-machine communication. In addition, how to provide communication services at a low cost is also critical to a successful communication deployment.

Based on the situation above, it is necessary to find a solution which enables a mobile network to support M2M communication, and the solution is required to maximize the reuse of existing networks so as to reduce the effect caused by a great amount of M2M communication in the networks and decrease the complexity of operation maintenance.

At present, with the competition in the telecommunication market becoming increasingly fierce and the charge on communications getting lower and lower, operators earn less and less profit as a human-orientated communication market is becoming saturated, in this context, M2M becomes a new development opportunity for operators.

To utilize mobile network resources effectively, the 3rd Generation Partnership Project (3GPP) has proposed Machine Type Communication (MTC), that is, M2M and Machine-to-Man communication services, the service range of which is highly beyond that of the conventional Human-to-Human (H2H) communications, and which is very different from existing H2H communication mode in access control, charging, security, Quality of Service (QoS), service mode and other aspects.

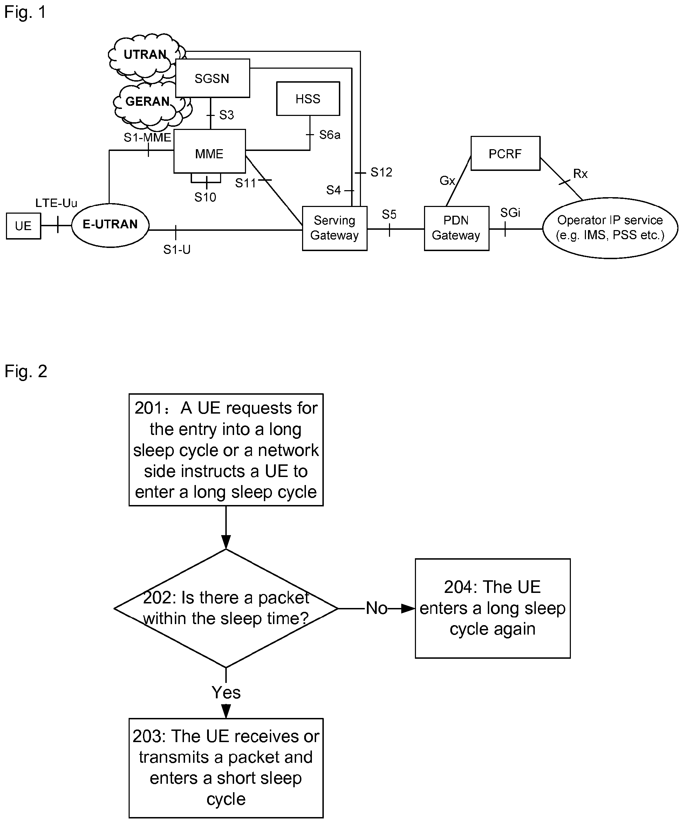

Fig. 1 is a schematic diagram illustrating the architecture of a 3GPP Evolved Packet System (EPS). As shown in Fig. 1, an EPS includes a wireless access network (e.g. E-UTRAN) and a core network, for example, network elements such as a Mobility Management Entity (MME), a Serving Gateway and a PDN Gateway are arranged in an Evolved Packet Core (EPC) network; network elements such as a Serving GPRS Support Node (SGSN) are included in a GPRS core network; and an evolved Node B (eNB) is included in an E-UTRAN.

Measures should be taken to reduce the power consumption of an MTC UE powered by a battery, and the power consumption of an MTC UE powered by a power supply should also be reduced, so as to realize the purpose of protecting environment and saving energy. At present, as smart phones have become more and more popular, a large number of applications have been run on smart phones, and these applications may increase the power consumption of the battery of a smart phone and shorten the service life of the battery, thus, how to save the power of a smart phone is also a crucial problem which have to be addressed.

It is found, during the study and implementation of existing technologies, that existing technologies have the following problem: although MTC UEs and smart phones are required to be power-saving, no solution has been proposed to address the problems as to how to optimize the energy conservation of a UE in a connected state, how to reduce the signaling interaction between a UE and a network side and how to balance energy conservation and time delay.

US 2008/0232310 discloses flexible user equipment-specified discontinuous reception.

US 2012/0214502 discloses offline device paging.

EP 2190253 discloses mobile communication system and mobile station.

US 2010/173651 A1 discloses a method and apparatus of operating in idle mode in a wireless communication system.

### SUMMARY

In view of this, the disclosure is mainly intended to provide a method and system of electric energy consumption optimization for enabling a non-serving UE to enter an idle mode to save power.

To this end, the technical solutions of the disclosure are implemented as follows.

A method of electric energy consumption optimization is provided, as recited in claim 1.

A system of electric energy consumption optimization is provided, as recited in claim 8.

In the embodiments of the disclosure, a network side and a UE select a long sleep cycle according to the time delay requirement of an application; in order to enter the long sleep cycle, the UE transmits a request to the network side or the network side transmits an instruction to the UE; if no packet arrives at the UE within the sleep time of the long sleep cycle, then the UE enters a long sleep cycle again or enters a longer sleep cycle after the current long sleep cycle is over; if there is an uplink packet coming within the sleep cycle, then the UE returns to an active mode to transmit the packet, if a downlink packet arrives within the sleep cycle, then the UE waits until the sleep cycle is over and then receives the packet; the UE enters a short sleep cycle after receiving or transmitting the packet; and the UE is capable of performing location update during the sleep cycle. Accordingly, the power consumption of a UE and the signaling interaction between the UE and a network side can be reduced and thus electric energy consumption optimization is achieved.

### BRIEF DESCRIPTION OF THE DRAWINGS

Fig. 1 is a schematic diagram illustrating the architecture of a 3GPP EPS;
Fig. 2 is a flowchart illustrating a method of electric energy consumption optimization according to embodiment 1 of the disclosure;
Fig. 3 is a schematic diagram illustrating a long cycle and a short cycle according to an embodiment of the disclosure;
Fig. 4 is a flowchart illustrating a method of electric energy consumption optimization according to embodiment 2 of the disclosure;
Fig. 5 is a flowchart illustrating a method of electric energy consumption optimization according to embodiment 3 of the disclosure; and
Fig. 6 is a flowchart illustrating a method of electric energy consumption optimization according to embodiment 4 of the disclosure.

### DETAILED DESCRIPTION

To make the object, the technical solution and the advantages of the disclosure more apparent, the disclosure is described below in detail with reference to accompanying drawings when read in conjunction with specific embodiments.

Fig. 2 is a flowchart illustrating a method of electric energy consumption optimization according to embodiment 1 of the disclosure, and as shown in Fig. 2, an exemplary electric energy consumption optimization method includes the following steps.

Step 201 includes that a UE requests for the entry into a long sleep cycle or a network side instructs a UE to enter a long sleep cycle.

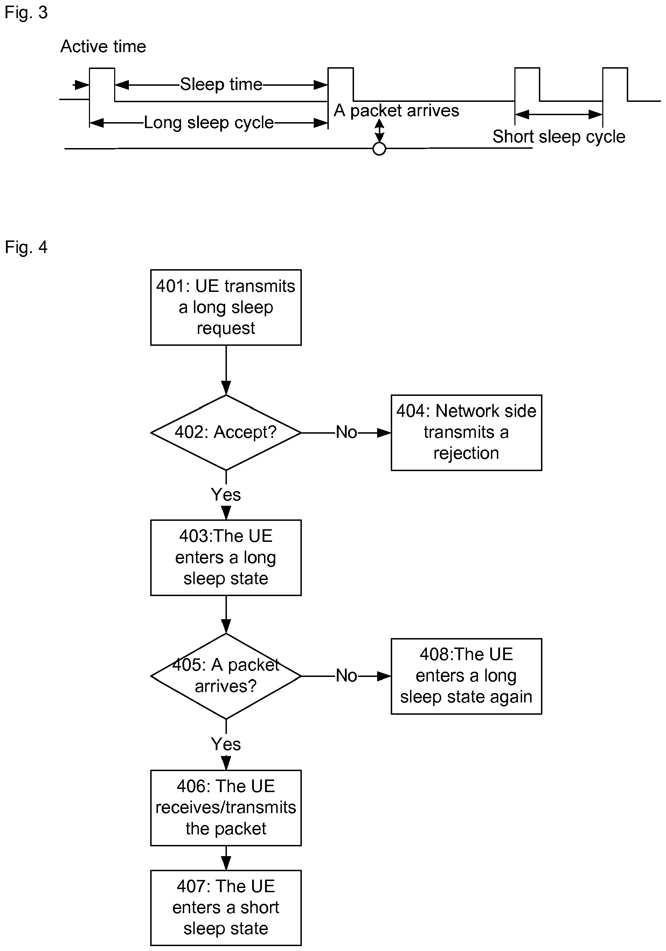

The UE requesting for the entry into a long sleep cycle means that the UE transmits a request to the network side or that the user operates the UE to transmit a request to the network side; the request includes one or more of followings: a UE identifier and a long sleep cycle enabling identifier, wherein the UE identifier may be any of followings: an International Mobile Subscriber Identification Number (IMSI), a Mobile Subscriber International ISDN/PSTN Number (MSISDN) and a UE external identifier; and the long sleep cycle enabling identifier is for instructing the UE to enter a long sleep cycle. The length of the long sleep cycle is configured by the network side and is transmitted to the UE in advance through RRC signaling. Fig. 3 is a schematic diagram illustrating a long cycle and a short cycle according to an embodiment of the disclosure, as shown in Fig. 3, a long DRX cycle is generally n times of the duration of a short DRX cycle, wherein n is an integer; the UE enters a long DRX cycle if no packet data is received or transmitted in a plurality of successive short DRX cycles (DRX short Cycle Timer). The long sleep cycle is a long DRX cycle and includes an active time and a sleep time, wherein in the active time, a paging channel and/or a broadcast channel are/is monitored, and the UE is capable of receiving/transmitting a packet; and in the sleep time, the UE stops receiving/transmitting a packet and shuts off most of receiving/transmitting circuits. The UE may be in a connected (RRC_Connected) state or an idle (RRC_Idle) state; for a DRX in a connected state, the network side stores the context of the UE; and for a DRX in an idle state, the network side deletes the context of the UE.

It should be noted that although embodiments of the disclosure are described by taking DRX as an example, the disclosure does not exclude the use of Discontinuous Transmission (DTX), and in fact, embodiments of the disclosure are also applicable to DTX, and the sleep cycle in the disclosure may also be a power-saving timer that is set by a network.

The network side may be one or more of followings: a base station, an MME/an SGSN. The instruction of the network side may be that the network side transmits a message to the UE to notify the UE to enter a long sleep cycle state, wherein the message includes one or more of followings: a UE identifier and a long sleep cycle identifier, wherein the UE identifier may be a single UE identifier or a category of UE identifiers such as low-priority UE identifiers (a low-priority category).

The UE includes an MTC device and a smart terminal, wherein the MTC UE refers to a UE having an MTC function, and the smart terminal includes: a smart phone, a tablet personal computer, a network adapter, a netbook and the like. For the MTC UE, the MTC UE enters a long sleep cycle by default if there is no display instruction.

The UE and the network side select a long sleep cycle according to the time delay requirement of an application, for example, the time delay requirement of the application is longer than a time delay caused by a long sleep cycle. If a plurality of applications requiring different time delays are run on the UE, then the UE selects a sleep cycle according to the application requiring the shortest time delay.

It should be noted that by default, the network side accepts the request from the UE or the UE accepts the instruction from the network side; if the network side or the UE rejects to enter a long sleep cycle because of, for example, the failure to meet the time delay requirement of an application or the arrival of an uplink/downlink packet, then the network side transmits a rejection response to the UE or the UE transmits a rejection response to the network side; and the UE enters a long sleep cycle if there is no rejection response.

Step 202 includes that whether or not there is the arrival of a packet within the sleep time is determined; if a packet arrives within the sleep time is determined, Step 203 is executed, otherwise, Step 204 is executed.

The determination refers to that the UE makes the determination after returning to an active mode; the sleep time refers to the sleep time within a long sleep cycle; and the packet includes an uplink packet and a downlink packet, that is, a packet transmitted by the UE and a packet received by the UE.

Step 203: the UE enters the active mode to receive or transmit the packet and enters a short sleep cycle after receiving/transmitting the packet.

The UE may be a UE in a connected state or a UE in an idle state; the UE in a connected state directly returns to the active mode, and the UE in an idle state first transmits a connection request to establish the connection with the network side;
if the packet is a downlink packet, that is, a packet needed to be received by the UE, then the UE waits to monitor a paging channel (or a broadcast channel) and receives the packet after the sleep time is over;
if the packet is an uplink packet, that is, a packet needed to be transmitted by the UE, then the UE immediately returns to the active mode from the sleep mode to transmit the packet; if the UE is in an idle state, then the UE initiates a random access process so as to connect with the network side and then transmits the packet;
it should be noted that the UE in the sleep mode may initiate a location update process, for example, the UE may enter a new location area when moving.

Step 204 includes that the UE enters a long sleep cycle again or enters a longer sleep cycle.

The UE enters a long sleep cycle again after the current sleep cycle is over; here, the network side informs, through AS/NAS signaling, the UE of the longer sleep cycle in advance, wherein the longer sleep cycle is n (n is an integer) times of the long sleep cycle.

Fig. 4 is a flowchart illustrating a method of electric energy consumption optimization according to embodiment 2 of the disclosure, and as shown in Fig. 4, an exemplary electric energy consumption optimization method proposed for a scenario in which a UE in a connected state transmits a request to a network side includes the following steps.

Step 401 includes that a UE transmits a long sleep cycle entry request to a network side;
the UE may be any of followings: an MTC UE and a smart terminal.
the UE transmits the request initiatively or under the operation of a user.

The request of the UE includes one or more of followings: a UE identifier and a long sleep cycle enabling identifier.

The network side is a base station and/or an MME/an SGSN.

The long sleep cycle is set by the network side and transmitted to the UE in advance through RRC signaling.

The long sleep cycle refers to a long DRX cycle and/or a long DTX cycle and includes an active time and a sleep time;
when the UE is an MTC device, the UE enters a long sleep cycle by default if there is no display instruction.

The UE determines whether or not to transmit the request according to the time delay of an application and its own requirement, for example, if the UE predicts that no data packet will be received or transmitted within a period of time (longer than the sleep time of the DRX/DTX cycle), then the UE transmits the long sleep cycle entry request.

Step 402 includes that the network side determines whether or not to accept the request of the UE; if the network side determines to accept the request of the UE, then Step 403 is executed, otherwise, Step 404 is executed.

The network side determines whether or not to accept the request of the UE according to the time delay of an application and its own requirement, for example, if the time delay of an application at the network side is longer that the sleep time of the long sleep cycle and/or downlink data is transmitted to the UE within the sleep time of the long sleep cycle, then the network side rejects the request of the UE.

Step 403 includes that the UE enters a long sleep cycle.

The long sleep cycle T includes an active time Ta and a sleep time Ts, that is, T=Ta+Ts, wherein within the active time Ta, the UE may transmit or receive a data packet; if no packet arrives within the Ta, then the UE directly enters a sleep state after the Ta is over; if a packet arrives within the Ta, the UE starts a timer T1 after receiving or transmitting the packet; the UE directly enters a sleep state when the time of the T1 is up if no packet arrives within the time of the T1; and if a packet arrives within the time of the T1, then the UE re-starts the timer T1 after receiving or transmitting the packet.

When in the sleep state (within the sleep time), the UE shuts off most of transmitting circuits and receiving circuits, but the UE is not shut down or detached from a network, in this case, the network stores the context of the UE until the UE updates its location or transmits a service request.

The UE is capable of moving when in the sleep state, the movement of the UE may trigger the handover of the UE in a connected state, for example, the reduction of the quality of the signal of a serving cell may lead the UE to exit the sleep state for handover.

Step 404 includes that the network side transmits a rejection and indicates a rejection reason, and the UE selects to enter a short sleep cycle, and then the flow is ended.

The rejection reason includes, but is not limited to: the failure to meet the time delay requirement of an application, and the existence of downlink data to be transmitted at the network side.

After receiving the rejection, the UE may select to enter a short sleep cycle according to the rejection reason if, for example, the short sleep cycle meets the time delay requirement of the application.

If the UE is not allowed to transmit the same request within a period of time, then the network side sets the period of time and informs the UE of the period of time in advance.

Step 405 includes that whether or not there is the arrival of a packet within the sleep time is determined, and if there is the arrival of a packet within the sleep time, then Step 406 is executed, otherwise, Step 408 is executed.

The arrival of a packet refers to the arrival of a packet within the sleep time of the long sleep cycle;
the packet may be an uplink or a downlink packet; the uplink packet refers to a packet transmitted by the UE, and the downlink packet refers to a packet received by the UE.

Step 406 includes that the UE enters an active mode to receive or transmit the packet.

If the packet is an uplink packet, then the UE exits the sleep state and enters the active state to transmit the packet; and if the packet is a downlink packet, then the UE waits until the current sleep time is over and then enters the active state to monitor a paging channel (or broadcast channel) and receives the downlink packet.

Step 407 includes that the UE enters a short sleep cycle after receiving or transmitting the packet.

After receiving or transmitting the packet, the UE starts the timer T1; if no packet arrives within the time of the T1, then the UE directly enters a short sleep cycle when the time of the T1 is up; if a packet arrives within the time of the T1, then the UE restarts the timer T1 after receiving/transmitting the packet and enters a short sleep cycle after the time of the T1 is up.

The UE starts a timer T2 while entering a short sleep cycle, and after the time of the T2 is up, the UE enters a long sleep cycle.

Step 408 includes that the UE enters a long sleep cycle again after the current long sleep cycle is over, and then the flow is ended.

After the long sleep cycle is over, the UE enters the next long sleep cycle; if the UE is in a connected state, then the network side may release the RRC connection and deletes the context of the UE at the base station, and the UE enters an idle state;
if the network side configures a longer sleep cycle which is longer than the long sleep cycle, then the UE may enter the longer sleep cycle.

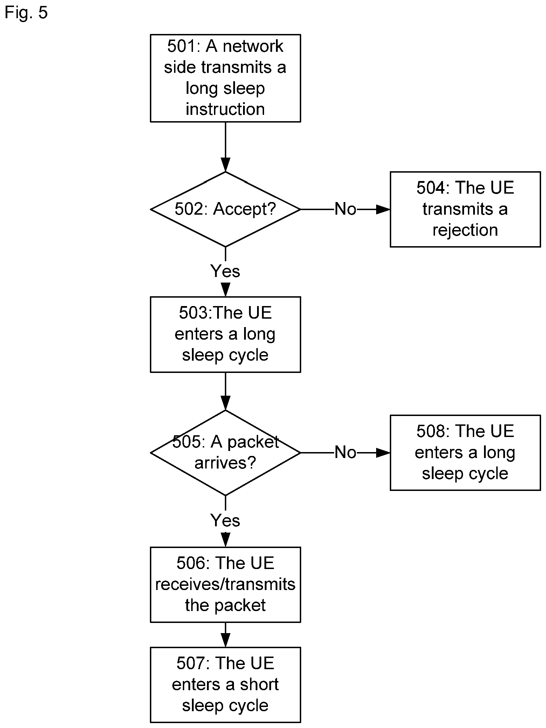

Fig. 5 is a flowchart illustrating a method of electric energy consumption optimization according to embodiment 3 of the disclosure, and as shown in Fig. 5, an exemplary electric energy consumption optimization method proposed for a scenario in which a network side transmits a power conservation instruction to a UE in a connected state includes the following steps.

Step 501 includes that a network side transmits a long sleep cycle entry instruction to a UE.

The network side transmits the long sleep cycle entry instruction to the UE through RRC signaling; the RRC signaling is system information or dedicated RRC signaling; the power conservation instruction includes one or more of followings: a UE identifier and a long sleep enabling identifier, wherein the UE identifier is a specific UE identifier or a group of UE identifiers such as low-priority UEs. If there is no UE identifier in the long sleep instruction, then corresponding UEs are all the UEs that receive the RRC signaling.

Step 502 includes that the UE determines whether or not to enter a long sleep state; if the UE determines to enter a long sleep state, then Step 503 is executed, otherwise, Step 504 is executed.

The UE determines whether or not to enter a long sleep state according to the time delay of an application and its own requirement, for example, the UE transmits a rejection response if the UE has uplink data to transmit or the long sleep time fails to meet the time delay requirement of the application.

Step 503 includes that the UE enters a long sleep cycle.

Identical to Step 403, this step is not described here repeatedly.

Step 504 includes that the UE transmits a rejection response, indicates a rejection reason, and selects to enter a short sleep cycle; and then the flow is ended.

The rejection reason includes, but is not limited to: the failure to meet the time delay requirement of an application, and the existence of downlink data to be transmitted at the network side.

After transmitting the rejection response, the UE may select to enter a short sleep cycle according to the rejection reason if, for example, the short sleep cycle meets the time delay requirement of the application.

Step 505 includes that whether or not there is the arrival of a packet within the sleep time is determined; if there is the arrival of a packet within the sleep time, Step 506 is executed, otherwise, Step 508 is executed.

Identical to Step 405, this step is not described here repeatedly.

Step 506 includes that the UE receives or transmits the packet.

Identical to Step 406, this step is not described here repeatedly.

Step 507 includes that the UE enters a short sleep cycle after receiving/transmitting the packet.

Identical to Step 407, this step is not described here repeatedly.

Step 508 includes that the UE enters a long sleep cycle again after the current long sleep cycle is over, and then the flow is ended.

Identical to Step 408, this step is not described here repeatedly.

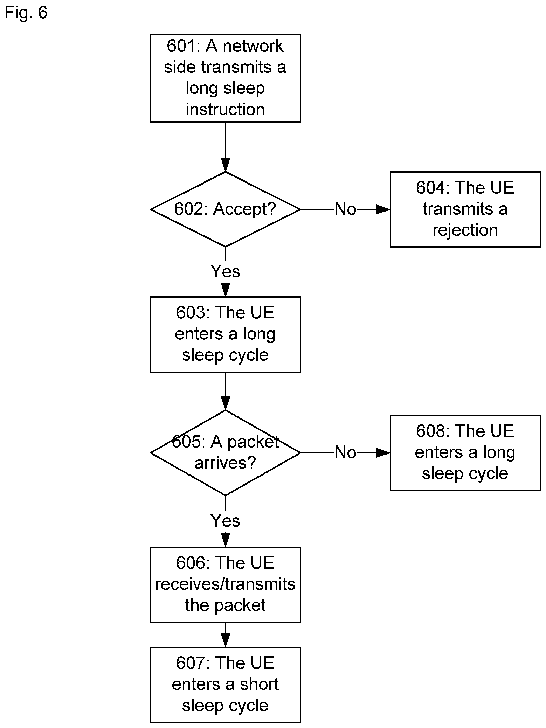

Fig. 6 is a flowchart illustrating a method of electric energy consumption optimization according to embodiment 3 of the disclosure, and as shown in Fig. 6, an exemplary electric energy consumption optimization method proposed for a scenario in which a network side transmits a long sleep cycle entry instruction to a UE in an idle state includes the following steps.

Step 601 includes that a network side transmits a long sleep cycle entry instruction to a UE.

Step 602 includes that the UE determines whether or not to enter a long sleep cycle; if the UE determines to enter a long sleep cycle, then Step 603 is executed, otherwise, Step 604 is executed.

Identical to Step 402, this step is not described here repeatedly.

Step 603 includes that the UE enters a long sleep cycle.

The UE in a sleep state can move, and the movement of the UE may trigger the UE in an idle state to perform the cell reselection, for example, the reduction of the quality of the signal of a serving cell may trigger the UE to exit the sleep state for handover or cell reselection; the movement of the UE may also trigger the UE in an idle state to update the location, for example, when a new cell is not in the Tracking Area (TA) list of the UE; the location update includes any one of followings: a Tracking Area Update (TAU), a Routing Area Update (RAU) and a Locating Area Update (LAU).

Step 604 includes that the UE transmits a rejection response and indicates a rejection reason, and the UE selects to enter a short sleep cycle, and then the flow is ended.

The UE first transmits a connection request to the network side, the UE enters an RRC_Connected state and transmits a rejection to the network side through RRC signaling, wherein the rejection reason includes, but is not limited to: the existence of uplink data needed to be transmitted at the UE and the failure to meet the time delay requirement of an application.

After transmitting the rejection, the UE selects to enter a short sleep cycle according to the rejection reason if, for example, the short sleep cycle meets the time delay requirement of the application.

Step 605 includes that whether or not there is the arrival of a packet within the sleep time is determined; if there is the arrival of a packet within the sleep time, Step 606 is executed, otherwise, Step 608 is executed.

Identical to Step 405, this step is not described here repeatedly.

Step 606 includes that the UE receives or transmits the packet.

The UE is in an idle state, if the packet is an uplink packet, then the UE exits the sleep state and transmits a service request to the network side to connect with the network side and then transmits the packet; and if the packet is a downlink packet, then the UE waits until the current sleep time is over and then enters an active state to monitor a paging channel (or broadcast channel) and receives the downlink packet.

Step 607 includes that the UE enters a short sleep cycle after receiving/transmitting the packet

Identical to Step 407, this step is not described here repeatedly.

Step 608 includes that the UE enters a long sleep cycle again after the current long sleep cycle is over, and then the flow is ended.

A system of electric energy consumption optimization is also disclosed, including an UE and a network side, wherein
the network side and the UE are configured to select a long sleep cycle according to the time delay requirement of an application;
the UE is further configured to transmit a long sleep cycle entry request to the network side, or the network side is further configured to transmit a long sleep cycle entry instruction to the UE.

The UE is further configured to enter a long sleep cycle again or enter a longer sleep cycle after the current long sleep cycle is over if no packet arrives at the UE within the sleep time of the current long sleep cycle, to enter an active mode and transmit a packet if there is an uplink packet within the sleep time of the long sleep cycle, to wait until the sleep cycle is over and then receive a packet if a downlink packet arrives, and to enter a short sleep cycle after receiving or transmitting the packet.

The UE is capable of performing location update within the sleep cycle.

The network side is also configured to configure the longer sleep cycle and inform the UE of the longer sleep cycle in advance, wherein the longer sleep cycle includes an active time and a sleep time, and the UE is further configured to monitor a paging channel and/or a broadcast channel and receive or transmit data packets in the active time.

The long sleep cycle includes at least one of followings: a discontinuous reception cycle, a discontinuous transmission cycle and the time cycle of a power-saving timer.

The UE includes an MTC device and a smart terminal; for the MTC device, the MTC device enters a long sleep cycle by default after it is determined that the MTC device needs to enter a sleep cycle but has not received any long sleep cycle entry instruction.

The network side is further configured to transmit, after receiving the long sleep cycle entry request from the UE, a long sleep cycle entry acknowledgement message to the UE if the time delay requirement of the application at the network side is not shorter than a time delay caused by the long sleep cycle.

The network side is further configured to determine the length of the long sleep cycle, wherein the long sleep cycle includes an active time and a sleep time, and in the active time, the UE monitors a paging channel and/or a broadcast channel and receives or transmits data packets.

The UE is also configured to sleep in a sleep cycle in a connected (RRC_Connected) state or an idle (RRC_Idle) state; for the UE sleeping in the RRC_Connected state, the network side is further configured to store the context of the UE; and for the UE sleeping in the RRC_Idle state, the network side is also configured to delete the context of the UE.

The network side is a base station, and/or an MME/an SGSN.

The electric energy system disclosed herein is formed by optimizing processing functions of related network elements based on an existing communication network, and can be understood with reference to the structure of the existing communication network. The functions of the improved related network elements can also be understood with reference to related description of the foregoing electric energy consumption optimization method.

Apparently, it should be appreciated by those skilled in the art that each module or step described in the disclosure can be realized by a universal computer and that the modules or steps may be integrated on a single computer or distributed on a network consisting of a plurality of computers, optionally, the modules or steps may be implemented by executable program codes so that the modules or steps can be stored in a memory to be executed by a computer, and in some cases, the steps shown or described herein can be executed in a sequence different from this presented herein, or the modules or steps are formed into integrated circuit modules, or several of the modules or steps are formed into integrated circuit modules. Therefore, the disclosure is not limited to the combination of specific hardware and software.

The mentioned above are only embodiments of the invention but not limitation to the invention.

### Industrial application

In the disclosure, a network side and a UE select a long sleep cycle according to a time delay requirement of an application; in order to enter the long sleep cycle, the UE transmits a request to the network side or the network side transmits an instruction to the UE; within the sleep time of the long sleep cycle, if no packet arrives at the UE, then the UE enters a long sleep cycle again or enters a longer sleep cycle after the current long sleep cycle is over; within the sleep cycle, if there is an uplink packet, then the UE returns to an active mode to transmit the packet, and if a downlink packet arrives, then the UE waits until the sleep cycle is over and then receives the packet; the UE enters a short sleep cycle after receiving or transmitting the packet; and the UE is capable of performing location update during the sleep cycle.

## Claims

1. A method of electric energy consumption optimization, comprising:
selecting, by a network side and a UE, a sleep cycle according to a time delay requirement of an application;
transmitting, by the UE, a sleep cycle entry request to the network side, or transmitting, by the network side, a sleep cycle entry instruction to the UE (201);
entering, by the UE, a sleep cycle according to the sleep cycle entry request and the sleep cycle entry instruction;
when no packet arrives at the UE within a sleep time of the sleep cycle, enabling the UE to enter a sleep cycle again or enter a longer sleep cycle after current sleep cycle is over (202, 204); and
when there comes an uplink packet to be sent to the network side within the sleep time of the sleep cycle, enabling the UE to enter an active mode and transmit the uplink packet; when a downlink packet arrives, keeping the UE waiting until the current sleep cycle is over and then receiving the downlink packet by the UE; and enabling the UE to enter a shorter sleep cycle after receiving the downlink packet or transmitting the uplink packet (202,203), wherein
the UE is capable of performing location update during any one of the sleep cycle, the longer sleep cycle and the shorter sleep cycle, the longer sleep cycle being longer than current sleep cycle, and the shorter sleep cycle being shorter than the current sleep cycle.

2. The method according to claim 1, further comprising:
configuring, by the network side, the longer sleep cycle and informing the UE of the longer sleep cycle in advance, wherein the longer sleep cycle includes an active time and a sleep time, and in the active time, the UE monitors a paging channel and/or a broadcast channel and receives or transmits a data packet.

3. The method according to claim 1, wherein the sleep cycle includes at least one of followings: a discontinuous reception cycle, a discontinuous transmission cycle, a time cycle of a power-saving timer.

4. The method according to claim 1, wherein the UE includes a Machine Type Communication, MTC, device and a smart terminal; the MTC device enters a sleep cycle by default after it is determined that the MTC device needs to enter a sleep cycle but has not yet received any sleep cycle entry instruction.

5. The method according to any one of claims 1 to 4, further comprising:
transmitting, by the network side, a sleep cycle entry acknowledgement message to the UE when the time delay requirement of the application at the network side is not shorter than a time delay caused by the sleep cycle after the network side receives the sleep cycle entry request from the UE.

6. The method according to any one of claims 1 to 4, wherein a length of the sleep cycle is determined by the network side; and the sleep cycle includes an active time and a sleep time, wherein in the active time, the UE monitors a paging channel and/or a broadcast channel and receives or transmits a data packet.

7. The method according to any one of claims 1 to 4, further comprising:
the UE sleeping in the sleep cycle in a Radio Resource Control_Connected, RRC_Connected, state or an RRC_Idle state; for the UE sleeping in the RRC_Connected state, storing, by the network side, context of the UE; and for the UE sleeping in the RRC_Idle state, deleting, by the network side, context of the UE.

8. A system of electric energy consumption optimization, comprising: an UE and a network side, wherein the network side and the UE are configured to select a sleep cycle according to a time delay requirement of an application;
the UE is further configured to transmit a sleep cycle entry request to the network side, or the network side is further configured to transmit a sleep cycle entry instruction to the UE;
the UE is further configured to enter a sleep cycle according to the sleep cycle entry request and the sleep cycle entry instruction;
the UE is further configured to enter a sleep cycle again or enter a longer sleep cycle after current sleep cycle is over if no packet arrives at the UE within a sleep time of the current sleep cycle, to enter an active mode when there comes an uplink packet to be sent to the network side within the sleep time of the current sleep cycle and transmit the uplink packet, to wait until the current sleep cycle is over and then receive a downlink packet when the downlink packet arrives, and to enter a shorter sleep cycle after receiving the downlink packet or transmitting the uplink packet, wherein
the UE is capable of performing location update within any one of the sleep cycle, the longer sleep cycle and the shorter sleep cycle, the longer sleep cycle being longer than current sleep cycle, and the shorter sleep cycle being shorter than the current sleep cycle.

9. The system according to claim 8, wherein the network side is also configured to configure the longer sleep cycle and inform the UE of the longer sleep cycle in advance; the longer sleep cycle includes an active time and a sleep time, wherein in the active time, the UE is further configured to monitor a paging channel and/or a broadcast channel and receive or transmit a data packet.

10. The system according to claim 8, wherein the sleep cycle includes at least one of followings: a discontinuous reception cycle, a discontinuous transmission cycle, a time cycle of a power-saving timer.

11. The system according to claim 8, wherein the UE includes a Machine Type Communication, MTC, device and a smart terminal; the MTC device enters a sleep cycle by default after it is determined that the MTC device needs to enter a sleep cycle but has not yet received any sleep cycle entry instruction.

12. The system according to any one of claims 8 to 11, wherein the network side is further configured to transmit, after receiving the sleep cycle entry request from the UE, a sleep cycle entry acknowledgement message to the UE when the time delay requirement of the application at the network side is not shorter than a time delay caused by the sleep cycle.

13. The system according to any one of claims 8 to 11, wherein the network side is further configured to determine a length of the sleep cycle, wherein the sleep cycle includes an active time and a sleep time, and in the active time, the UE monitors a paging channel and/or a broadcast channel and receives or transmits a data packet.

14. The system according to any one of claims 8 to 11, wherein the UE is also configured to sleep in the sleep cycle in a Radio Resource Control_Connected, RRC_Connected, state or an RRC_Idle state; for the UE sleeping in the RRC_Connected state, the network side is further configured to store context of the UE; and for the UE sleeping in the RRC_Idle state, the network side is also configured to delete context of the UE.

15. The system according to any one of claims 8 to 11, wherein the network side is a base station, or a Mobility Management Entity, MME,/a Serving GPRS Support Node, SGSN.

## Patentansprüche

1. Verfahren zum Optimieren des elektrischen Energieverbrauchs, umfassend folgende Schritte:
Auswählen durch eine Netzwerkseite und ein UE eines Ruhezyklus gemäß einer Verzögerungsanforderung einer Anwendung;
Senden durch das UE einer Anfrage zum Eintreten in den Ruhezyklus an die Netzwerkseite oder Senden durch die Netzwerkseite einer Anweisung zum Eintreten in den Ruhezyklus an das UE (201);
Eintreten durch das UE in einen Ruhezyklus gemäß der Anfrage zum Eintreten in den Ruhezyklus und der Anweisung zum Eintreten in den Ruhezyklus;
wenn kein Paket an dem UE innerhalb einer Ruhezeit des Ruhezyklus ankommt, Ermöglichen des UE, wieder in einen Ruhezyklus einzutreten oder in einen längeren Ruhezyklus einzutreten, nachdem der aktuelle Ruhezyklus beendet ist (202, 204); und
wenn ein Aufwärtsstreckenpaket, das während der Ruhezeit des Ruhezyklus an die Netzwerkseite zu senden ist, ankommt, Ermöglichen des UE, in einen aktiven Modus einzutreten und das Aufwärtsstreckenpaket zu senden; wenn ein Abwärtsstreckenpaket ankommt, Wartenlassen des UE, bis der aktuelle Ruhezyklus vorbei ist, und dann Empfangen des Abwärtsstreckenpakets durch das UE; und Ermöglichen des UE, in einen kürzeren Ruhezyklus einzutreten, nachdem das Abwärtsstreckenpaket empfangen oder das Aufwärtsstreckenpaket (202, 203) gesendet wurde, wobei
das UE in der Lage ist, eine Standortaktualisierung während eines von dem Ruhezyklus, dem längeren Ruhezyklus und dem kürzeren Ruhezyklus auszuführen, wobei der längere Ruhezyklus länger als der aktuelle Ruhezyklus ist, und der kürzere Ruhezyklus kürzer als der aktuelle Ruhezyklus ist.

2. Verfahren nach Anspruch 1, ferner umfassend:
Konfigurieren durch die Netzwerkseite des längeren Ruhezyklus und Informieren des UE über den längeren Ruhezyklus im Voraus, wobei der längere Ruhezyklus eine aktive Zeit und eine Ruhezeit umfasst, und das UE in der aktiven Zeit einen Funkrufkanal und/oder einen Rundsendekanal überwacht oder ein Datenpaket sendet.

3. Verfahren nach Anspruch 1, wobei der Ruhezyklus mindestens eines der folgenden Elemente umfasst: einen diskontinuierlichen Empfangszyklus, einen diskontinuierlichen Sendezyklus, einen Zeitzyklus eines energiesparenden Zeitschalters.

4. Verfahren nach Anspruch 1, wobei das UE eine "Machine-Type Communication", MTC, Vorrichtung und ein intelligentes Endgerät umfasst; die MTC-Vorrichtung standardmäßig in einen Ruhezyklus eintritt, nachdem bestimmt wurde, dass die MTC-Vorrichtung in einen Ruhezyklus eintreten muss, jedoch noch keine Anweisung zum Eintreten in den Ruhezyklus empfangen hat.

5. Verfahren nach einem der Ansprüche 1 bis 4, ferner umfassend:
das Senden durch die Netzwerkseite einer Nachricht zum Quittieren des Eintritts in den Ruhezyklus an das UE, wenn die Verzögerungsanforderung der Anwendung auf der Netzwerkseite nicht kürzer als eine Verzögerung ist, die durch den Ruhezyklus verursacht wird, nachdem die Netzwerkseite die Anfrage zum Eintreten in den Ruhezyklus von dem UE empfangen hat.

6. Verfahren nach einem der Ansprüche 1 bis 4, wobei eine Länge des Ruhezyklus durch die Netzwerkseite bestimmt wird; und der Ruhezyklus eine aktive Zeit und eine Ruhezeit umfasst, wobei das UE in der aktiven Zeit einen Funkrufkanal und/oder einen Übertragungskanal überwacht und ein Datenpaket empfängt oder sendet.

7. Verfahren nach einem der Ansprüche 1 bis 4, ferner umfassend:
das Ruhen des UE im Ruhezyklus in einem "Radio Resource Control_Connected", RRC_Connected, Zustand oder einem "RRC_Idle"-Zustand; für das UE, das im RRC_Connected-Zustand ruht, Speichern des Kontextes des UE durch die Netzwerkseite; und für das UE, das im RRC_Idle-Zustand ruht, Löschen des Kontextes des UE durch die Netzwerkseite.

8. System zum Optimieren des elektrischen Energieverbrauchs, umfassend: ein UE und eine Netzwerkseite, wobei die Netzwerkseite und das UE konfiguriert sind, um einen Ruhemodus gemäß einer Verzögerungsanforderung einer Anwendung auszuwählen;
das UE ferner konfiguriert ist, um eine Anfrage zum Eintreten in den Ruhezyklus an die Netzwerkseite zu senden, oder die Netzwerkseite ferner konfiguriert ist, um eine Anweisung zum Eintreten in den Ruhezyklus an das UE zu senden;
das UE ferner konfiguriert ist, um gemäß der Anfrage zum Eintreten in den Ruhezyklus und der Anweisung zum Eintreten in den Ruhezyklus in einen Ruhezyklus einzutreten;
das UE ferner konfiguriert ist, um wieder in einen Ruhezyklus einzutreten oder in einen längeren Ruhezyklus einzutreten, nachdem der aktuelle Ruhezyklus vorbei ist, falls an dem UE innerhalb einer Ruhezeit des aktuellen Ruhezyklus kein Paket ankommt, um in einen aktiven Modus einzutreten, wenn ein Aufwärtsstreckenpaket ankommt, das innerhalb der Ruhezeit des aktuellen Ruhezyklus an die Netzwerkseite zu senden ist, und um das Aufwärtsstreckenpaket zu senden, um zu warten, bis der aktuelle Ruhezyklus vorbei ist, und um dann ein Abwärtsstreckenpaket zu empfangen, wenn das Abwärtsstreckenpaket ankommt, und um in einen kürzeren Ruhezyklus einzutreten, nachdem das Abwärtsstreckenpaket empfangen wurde oder das Aufwärtsstreckenpaket gesendet wurde, wobei
das UE in der Lage ist, eine Standortaktualisierung innerhalb eines von dem Ruhezyklus, dem längeren Ruhezyklus und dem kürzeren Ruhezyklus auszuführen, wobei der längere Ruhezyklus länger als der aktuelle Ruhezyklus ist, und der kürzere Ruhezyklus kürzer als der aktuelle Ruhezyklus ist.

9. System nach Anspruch 8, wobei die Netzwerkseite auch konfiguriert ist, um den längeren Ruhezyklus zu konfigurieren und das UE über den längeren Ruhezyklus im Voraus zu informieren; der längere Ruhezyklus eine aktive Zeit und eine Ruhezeit umfasst, wobei das UE in der aktiven Zeit ferner konfiguriert ist, um einen Funkrufkanal und/oder einen Rundsendekanal zu überwachen und ein Datenpaket zu empfangen oder zu senden.

10. System nach Anspruch 8, wobei der Ruhezyklus mindestens eines der folgenden Elemente umfasst: einen diskontinuierlichen Empfangszyklus, einen diskontinuierlichen Sendezyklus, einen Zeitzyklus eines energiesparenden Zeitschalters.

11. System nach Anspruch 8, wobei das UE eine "Machine-Type Communication", MTC, Vorrichtung und ein intelligentes Endgerät umfasst; die MTC-Vorrichtung standardmäßig in einen Ruhezyklus eintritt, nachdem bestimmt wurde, dass die MTC-Vorrichtung in einen Ruhezyklus eintreten muss, jedoch noch keine Anweisung zum Eintreten in den Ruhezyklus empfangen hat.

12. System nach einem der Ansprüche 8 bis 11, wobei die Netzwerkseite ferner konfiguriert ist, um nach dem Empfangen der Anfrage zum Eintreten in den Ruhezyklus von dem UE eine Nachricht zum Quittieren des Eintretens in den Ruhezyklus an die UE zu senden, wenn die Verzögerungsanforderung der Anwendung auf der Netzwerkseite nicht kürzer als eine Verzögerung ist, die durch den Ruhezyklus verursacht wird.

13. System nach einem der Ansprüche 8 bis 11, wobei die Netzwerkseite ferner konfiguriert ist, um eine Länge des Ruhezyklus zu bestimmen, wobei der Ruhezyklus eine aktive Zeit und eine Ruhezeit umfasst, und in der aktiven Zeit das UE einen Funkrufkanal und/oder einen Rundsendekanal überwacht und ein Datenpaket empfängt oder sendet.

14. System nach einem der Ansprüche 8 bis 11, wobei das UE auch konfiguriert ist, um in dem Ruhezyklus in einem "Radio Resource Control_Connected", RRC_Connected, Zustand oder einem "RRC_Idle"-Zustand zu ruhen; für das UE, das im RRC_Connected-Zustand ruht, die Netzwerkseite ferner konfiguriert ist, um den Kontext des UE zu speichern; und für das UE, das im RRC_Idle-Zustand ruht, die Netzwerkseite auch konfiguriert ist, um den Kontext des UE zu löschen.

15. System nach einem der Ansprüche 8 bis 11, wobei die Netzwerkseite eine Basisstation oder eine Mobilitätsverwaltungsentität, MME/ ein bedienender GPRS-Unterstützungsknoten, SGSN, ist.

## Revendications

1. Procédé d'optimisation de consommation d'énergie électrique, comprenant :
la sélection, par un côté réseau et un UE, d'un cycle de sommeil selon une exigence de temporisation d'une application ;
la transmission, par l'UE, d'une demande d'entrée en cycle de sommeil au côté réseau, ou la transmission, par le côté réseau, d'une instruction d'entrée en cycle de sommeil à l'UE (201) ;
l'entrée, par l'UE, dans un cycle de sommeil selon la demande d'entrée en cycle de sommeil et l'instruction d'entrée en cycle de sommeil ;
lorsqu'aucun paquet n'arrive à l'UE au sein d'un temps de sommeil du cycle de sommeil, la permission, à l'UE, d'entrer dans un cycle de sommeil à nouveau ou d'entrer dans un cycle de sommeil plus long après qu'un cycle de sommeil actuel est terminé (202, 204) ; et
lorsqu'un paquet de liaison montante destiné à être envoyé au côté réseau arrive au sein du temps de sommeil du cycle de sommeil, la permission, à l'UE, d'entrer dans un mode actif et de transmettre le paquet de liaison montante ; lorsqu'un paquet de liaison descendante arrive, le maintien de l'UE en attente jusqu'à ce que le cycle de sommeil actuel soit terminé et puis la réception du paquet de liaison descendante par l'UE ; et la permission, à l'UE, d'entrer dans un cycle de sommeil plus court après la réception du paquet de liaison descendante ou la transmission du paquet de liaison montante (202, 203), dans lequel
l'UE est capable de réaliser une actualisation de localisation durant l'un quelconque parmi le cycle de sommeil, le cycle de sommeil plus long et le cycle de sommeil plus court, le cycle de sommeil plus long étant plus long qu'un cycle de sommeil actuel, et le cycle de sommeil plus court étant plus court que le cycle de sommeil actuel.

2. Procédé selon la revendication 1, comprenant en outre :
la configuration, par le côté réseau, du cycle de sommeil plus long et la notification, à l'UE, du cycle de sommeil plus long d'avance, dans lequel le cycle de sommeil plus long inclut un temps actif et un temps de sommeil, et, dans le temps actif, l'UE surveille un canal de radiomessagerie et/ou un canal de diffusion et reçoit ou transmet un paquet de données.

3. Procédé selon la revendication 1, dans lequel le cycle de sommeil inclut au moins l'un des suivants : un cycle de réception discontinue, un cycle de transmission discontinue, un cycle de temps d'une minuterie à économies d'énergie.

4. Procédé selon la revendication 1, dans lequel l'UE inclut un dispositif MTC, « Communication de Type Machine », et un terminal intelligent ; le dispositif MTC entre dans un cycle de sommeil par défaut après qu'il est déterminé que le dispositif MTC doit entrer dans un cycle de sommeil mais n'a pas encore reçu d'instruction d'entrée en cycle de sommeil.

5. Procédé selon l'une quelconque des revendications 1 à 4, comprenant en outre :
la transmission, par le côté réseau, d'un message d'accusé de réception d'entrée en cycle de sommeil à l'UE lorsque l'exigence de temporisation de l'application sur le côté réseau n'est pas plus courte qu'une temporisation causée par le cycle de sommeil après que le côté réseau reçoit la demande d'entrée en cycle de sommeil à partir de l'UE.

6. Procédé selon l'une quelconque des revendications 1 à 4, dans lequel une longueur du cycle de sommeil est déterminée par le côté réseau ; et le cycle de sommeil inclut un temps actif et un temps de sommeil, dans lequel, dans le temps actif, l'UE surveille un canal de radiomessagerie et/ou un canal de diffusion et reçoit ou transmet un paquet de données.

7. Procédé selon l'une quelconque des revendications 1 à 4, comprenant en outre :
le sommeil de l'UE dans le cycle de sommeil dans un état Gestion de Ressource Radio_Connectée, RRC_Connectée, ou un état RRC_Inactif ; pour l'UE en sommeil dans l'état RRC_Connectée, le stockage, par le côté réseau, d'un contexte de l'UE ; et pour l'UE en sommeil dans l'état RRC_Inactif, la suppression, par le côté réseau, d'un contexte de l'UE.

8. Système d'optimisation de consommation d'énergie électrique, comprenant : un UE et un côté réseau, dans lequel le côté réseau et l'UE sont configurés pour sélectionner un cycle de sommeil selon une exigence de temporisation d'une application ;
l'UE est en outre configuré pour transmettre une demande d'entrée en cycle de sommeil au côté réseau, ou le côté réseau est en outre configuré pour transmettre une instruction d'entrée en cycle de sommeil à l'UE ;
l'UE est en outre configuré pour entrer dans un cycle de sommeil selon la demande d'entrée en cycle de sommeil et l'instruction d'entrée en cycle de sommeil ;
l'UE est en outre configuré pour entrer dans un cycle de sommeil à nouveau ou entrer dans un cycle de sommeil plus long après qu'un cycle de sommeil actuel est terminé si aucun paquet n'arrive à l'UE au sein d'un temps de sommeil du cycle de sommeil actuel, pour entrer dans un mode actif lorsqu'un paquet de liaison montante destiné à être envoyé au côté réseau arrive au sein du temps de sommeil du cycle de sommeil actuel et transmettre le paquet de liaison montante, pour attendre jusqu'à ce que le cycle de sommeil actuel soit terminé et puis recevoir un paquet de liaison descendante lorsque le paquet de liaison descendante arrive, et pour entrer dans un cycle de sommeil plus court après la réception du paquet de liaison descendante ou la transmission du paquet de liaison montante, dans lequel
l'UE est capable de réaliser une actualisation de localisation au sein de l'un quelconque parmi le cycle de sommeil, le cycle de sommeil plus long et le cycle de sommeil plus court, le cycle de sommeil plus long étant plus long que cycle de sommeil actuel, et le cycle de sommeil plus court étant plus court que le cycle de sommeil actuel.

9. Système selon la revendication 8, dans lequel le côté réseau est également configuré pour configurer le cycle de sommeil plus long et notifier, à l'UE, le cycle de sommeil plus long d'avance ; le cycle de sommeil plus long inclut un temps actif et un temps de sommeil, dans lequel dans le temps actif, l'UE est en outre configuré pour surveiller un canal de radiomessagerie et/ou un canal de diffusion et recevoir ou transmettre un paquet de données.

10. Système selon la revendication 8, dans lequel le cycle de sommeil inclut au moins l'un des suivants : un cycle de réception discontinue, un cycle de transmission discontinue, un cycle de temps d'une minuterie à économies d'énergie.

11. Système selon la revendication 8, dans lequel l'UE inclut un dispositif MTC, « Communication de Type Machine », et un terminal intelligent ; le dispositif MTC entre dans un cycle de sommeil par défaut après qu'il est déterminé que le dispositif MTC doit entrer dans un cycle de sommeil mais n'a pas encore reçu d'instruction d'entrée en cycle de sommeil.

12. Système selon l'une quelconque des revendications 8 à 11, dans lequel le côté réseau est en outre configuré pour transmettre, après la réception de la demande d'entrée en cycle de sommeil à partir de l'UE, un message d'accusé de réception d'entrée en cycle de sommeil à l'UE lorsque l'exigence de temporisation de l'application sur le côté réseau n'est pas plus courte qu'une temporisation causée par le cycle de sommeil.

13. Système selon l'une quelconque des revendications 8 à 11, dans lequel le côté réseau est en outre configuré pour déterminer une longueur du cycle de sommeil, dans lequel le cycle de sommeil inclut un temps actif et un temps de sommeil, et, dans le temps actif, l'UE surveille un canal de radiomessagerie et/ou un canal de diffusion et reçoit ou transmet un paquet de données.

14. Système selon l'une quelconque des revendications 8 à 11, dans lequel l'UE est également configuré pour être en sommeil dans le cycle de sommeil dans un état Gestion de Ressource Radio_Connectée, RRC_Connectée, ou un état RRC_Inactif ; pour l'UE en sommeil dans l'état RRC_Connectée, le côté réseau est en outre configuré pour stocker un contexte de l'UE ; et pour l'UE en sommeil dans l'état RRC_Inactif, le côté réseau est également configuré pour supprimer un contexte de l'UE.

15. Système selon l'une quelconque des revendications 8 à 11, dans lequel le côté réseau est une station de base, ou une MME, « Entité de Gestion de la Mobilité »/un SGSN, « un noeud de support du GPRS de desserte ».
